# NEW EUROPEAN PATENT SPECIFICATION

(11) **EP 1 253 777 B2**
(45) Date of publication and mention of the opposition decision: **07.01.2015**
(45) Mention of the grant of the patent: 13.07.2011
(21) Application number: 02252809.5
(22) Date of filing: 22.04.2002
(51) Int. Cl.: H04N 21/258, H04N 21/422, H04N 21/441, H04N 21/443, H04N 21/45, H04N 21/47, H04N 21/482, H04N 21/84

(54) **Electronic equipment and electronic equipment control method**
Elektronisches Gerät und Kontrollverfahren für ein elektronisches Gerät
Dispositif électronique et méthode de contrôle d'un dispositif électronique

(30) Priority: 27.04.2001 JP 2001132525
(43) Date of publication of application: 30.10.2002
(73) Proprietor: Sony Corporation, Tokyo 141 (JP)
(72) Inventor: Sato, Masahiko, Intell. Prop. Dept. Sony Corp., Tokyo 141-0001 (JP)
(74) Representative: Davies, Simon Robert

(56) References cited:
- EP-B1- 0 435 370
- WO-A-99/35846
- WO-A-99/66714
- WO-A1-98/20678
- WO-A1-99/45709
- DE-A1- 19 858 310
- GB-A- 2 332 315
- US-A- 5 550 575
- US-A- 5 583 560

## Description

### Field of Invention

The present invention relates to electronic equipment and an electronic equipment control method. More particularly, embodiments of the present invention relate to electronic equipment such as receivers (set-top units) that receive broadcast programs which are shared by a plurality of persons, and electronic equipment control methods.

### Background of Invention

Related arts have provided such equipment and a service that automatically notify (recommend) a user of a broadcast program that matches the user's likes or record the broadcast program. Herein, the equipment such as a receiver (set-top unit) that receives broadcast programs provided by TiVo Inc. in the U.S.A is connected on a telephone line, and acquires viewing information, from which it is judged what broadcast programs the user views, so as to analyze the user's likes and dislikes. Thus, a broadcast program matching the user's likes is automatically notified (recommended) or automatically recorded.

However, a problem underlies the above equipment and service. Namely, a plurality of persons such as family members usually shares one piece of electronic equipment such as a receiver (set-top unit). A feature to be utilized is different from person to person. Nevertheless, the persons must share the same operating means (for example, operation buttons on a remote controller). This is not an environment in which every person enjoys operating the equipment. Moreover, a service may be rendered for acquiring and analyzing viewing information concerning broadcast programs viewed by a user and providing broadcast program information or product information that matches the user's likes. Even in this case, when a plurality of persons shares one piece of electronic equipment, viewing information items relevant to the persons are mixed. This poses a problem in that information matching the likes of a person whose wants to use the electronic equipment from now one cannot be provided.

Consequently, the electronic equipment such as a receiver (set-top unit) that receives a digital broadcasting service and is shared by a plurality of persons is demanded to be able to identify a person who uses the equipment, offer an environment in which the identified person enjoys operating the equipment, and provide broadcast program information or product information that matches the identified person's likes and dislikes.

WO 99/35846 describes a method and apparatus for automatically configuring a system based on a user's monitored interaction and preferred system access times. The method and system update a user profile corresponding to the user based at least in part on the monitored user interaction with the system. A system controller determines which user is currently using the system by identifying whether information in a behaviour log matches data for any known system user. The user may be prompted to confirm the match.

### Summary of Invention

Various aspects and features of the present invention are defined in the appended claims.

In efforts to solve the problems, electronic equipment and an electronic equipment control method in accordance with the present invention have the features described below.

Herein, a person who utilizes the equipment is identified, and broadcast program information or product information that matches an environment in which the identified person enjoys operating the equipment or the identified person's likes and dislikes is provided

When the power supply of electronic equipment is turned on, the electronic equipment identifies a user. The equipment then acts in a predetermined setting dependent on the user or the use records relevant to the user. Consequently, the equipment can be operated in an environment in which each user enjoys operating the equipment. Moreover, since a user can be identified, the use records of the equipment or viewed broadcast programs can be acquired for each user. The use records or viewed broadcast programs are analyzed in order to provide broadcast program information or product information that matches each person's likes and dislikes, or eventually, to offer an environment in which each person enjoys operating the equipment.

### Brief Description of the Drawings

The invention will now be described by way of example with reference to the accompanying drawings, in which:
Fig. 1 schematically shows an example of a broadcasting and receiving system including electronic equipment (receiver) in accordance with the present invention that is used to receive a digital broadcasting service.
Fig. 2 is a block diagram showing the components of a receiver that is an example of the electronic equipment in accordance with the present invention and that is used to receive a digital broadcasting service.
Fig. 3A and 3B show the appearance of a remote controller that complies with (recommended in) the ARIB TR-15 standard, that is used to operate a digital broadcasting receiver, and that is an example of a remote controller with which the receiver (electronic equipment) in accordance with the present invention is operated.
Fig. 4 is an explanatory diagram concerning keys (operation buttons) on a remote controller that complies with the ARIB TR-15 standard and that is used to receive a data broadcasting service.
Fig. 5 is an explanatory diagram concerning the data structure of a content descriptor that describes the category of a broadcast program to be distributed through digital broadcasting that complies with the ARIB standards, and the rules for transmission.
Fig. 6 is an explanatory diagram listing values, which are specified in the content descriptor stipulated in the ARIB standards in order to describe the category of a broadcast program to be distributed through digital broadcasting, and their meanings.

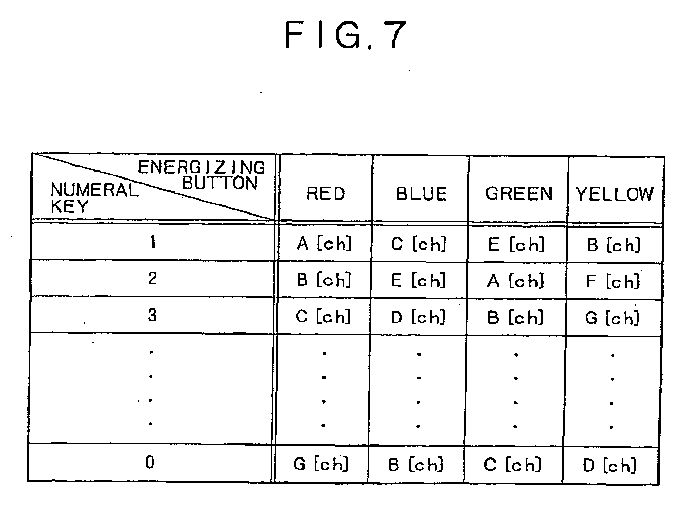

Fig. 7 is an explanatory diagram listing broadcast channels that are set to operation buttons on a remote controller, which is used to operate the receiver (electronic equipment) in accordance with the present invention, according to an environment in which each user enjoys operating the receiver.
Fig. 8A and Fig. 8B show examples of arrangement of information items of programs represented by electronic program information and displayed on a screen owing to the receiver (electronic equipment) in accordance with the present invention.

### Description of Special Embodiments

Embodiments of electronic equipment and an electronic equipment control method in accordance with the present invention will be described with reference to the drawings below.

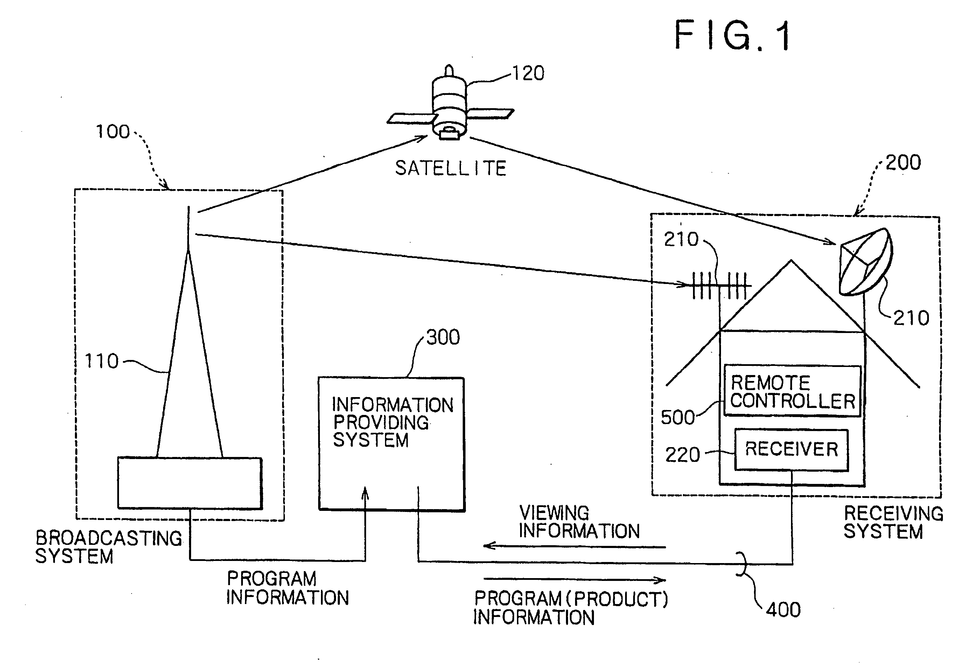

A digital broadcasting and receiving system shown in Fig. 1 consists mainly of a broadcasting system 100, a receiving system 200, and an information providing system 300. The broadcasting system 100 allows a broadcasting station to transmit a broadcast program via a satellite 120 through a transmitting antenna 110 or to provide broadcast program information. The receiving system 200 is owned by a user and composed of an antenna 210 (for receiving ground waves and a satellite broadcasting service), through which a broadcast program transmitted from the broadcasting system 100 is received, and a receiver 220 that is electronic equipment. The information providing system 300 acquires viewing information from the user's receiver 220 over a network such as telephone lines. The information providing system 300 then analyzes the user's likes and dislikes relevant to broadcast programs and products, and provides program information (electronic program information (EPG)) or product information sent from the broadcasting station in a form that matches the user's likes and dislikes or the user's intention. Incidentally, the broadcasting system 100 and information providing system 200 are interconnected over a network and can transfer program information and others to and from each other.

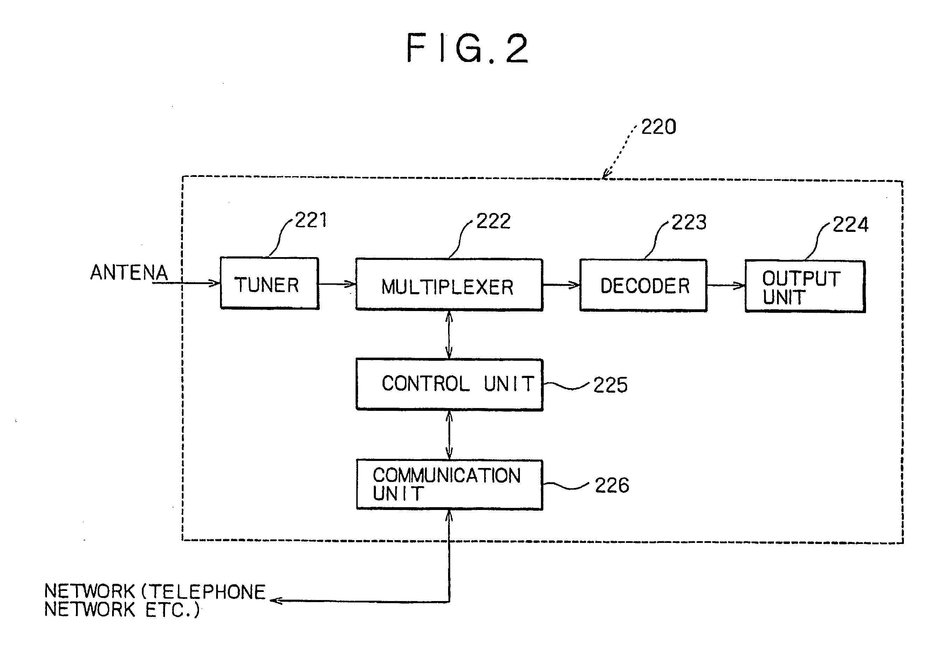

Fig. 2 schematically shows an example of the major portion of the receiver 220 (electronic equipment) included in the receiving system 200 owned by a user. The receiver 220 consists mainly of a tuner 221, a demultiplexer (DMUX) 222, a decoder 223, an output unit 224, a control unit 225, a communication unit 226, and a remote controller 500. The tuner 221 selects one radio wave (broadcast program signal) whose frequency falls within a digital broadcast band. The demultiplexer 222 separates a video signal, an audio signal, and a data signal, which are contained in a radio wave received by the tuner 221, and attribute (category) information concerning a broadcast program to be viewed from one another. The decoder 223 decodes the video signal, sound signal, and data signal, which are separated by the demultiplexer 222, into a signal representing an image, sounds, and data. The output unit 224 transmits the signal, which represents the image, sounds, and data and is produced by the decoder 223, to a monitor or the like. The control unit 225 controls the components of the receiver 220. The communication unit 226 transmits the attribute information (category) of a broadcast program and viewing information, which are received via the control unit 225, to the information providing system 300 owned by an information provider by way of a modem or the like. The remote controller 500 is used to operate the receiver 220. The receiver 220 has a feature permitting a user to set a screen image, in which information items are arranged in an easy-to-see manner, using the remote controller 500 or the like. Moreover, a user is permitted to set the operation buttons on the remote controller 500 to operating codes in an easy-to-use manner. Thus, each person can set an environment in which the person enjoys operating the receiver, and the setting can be stored in the receiver. When the power supply is turned on, if a predetermined operation button on the remote controller 500 is pressed, the receiver recognizes the set environment or stored setting, and starts acting. The receiver 220 may have a feature that preserves (acquires) and analyzes viewing information concerning broadcast programs viewed by a user, extracts program information, which matches the user's likes and dislikes, from electronic program information (EPG) or the like, and presents the program information.

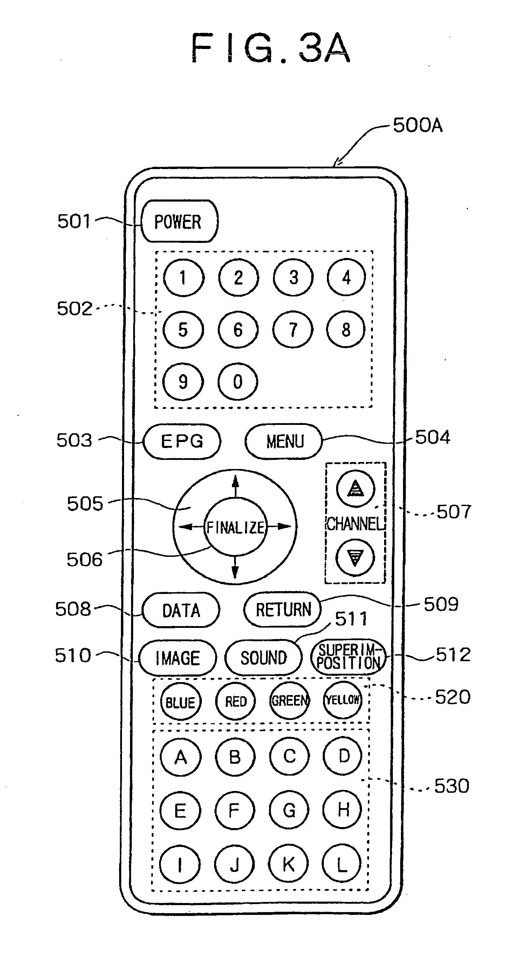

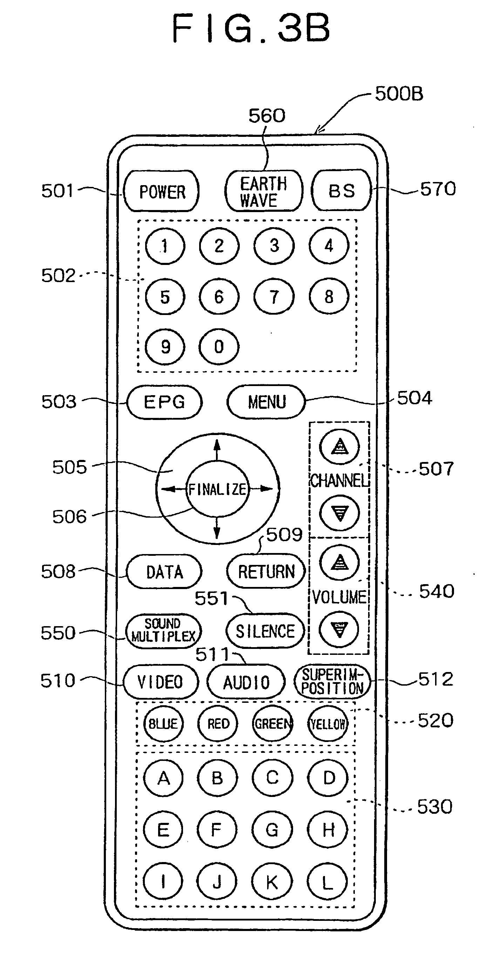

Fig. 3A and Fig. 3B show examples of the remote controller 500 used to operate the receiver 220. Fig. 3A shows a remote controller 500A designed for a broadcasting-satellite (BS) digital tuner recommended in clause TR-B15 of the Standards for BS Digital Broadcasting stipulated by the Association of Radio Industries and Businesses (ARIB). Fig. 3B shows a remote controller 500B designed for a television with a built-in BS tuner.

The remote controllers 500A and 500B shown in Fig. 3A and Fig. 3B have a Power button 501 that is used to turn on or off (bring the receiver to a standby state) the power supply of the receiver 220, 0 to 9 numeral keys (ten-key pad) 502 that are used to enter a channel number so as to select a broadcasting station, and an EPG button that is used to display a program list (electronic program information) provided by an information provider or broadcasting stations. Moreover, the remote controllers 500A and 500_{B} have a Menu button 504 that is used to display a system menu concerning the receiver 220, and arrow buttons (T, ↓, →, and ←) 505 that are used to vertically and laterally move a cursor displayed on the screen. Moreover, the remote controllers 500A and 500B have a Finalize button 506 that is used to finalize an item, which is indicated with the cursor displayed on the screen, as a selected item, Up and Down buttons 507 that are used to select a channel, and a Data button 508 that is used to receive a data broadcasting service. Moreover, the remote controllers 500A and 500B have a Return button 509 that is used to cancel designation or execution, an Image button 510 that is used to select a relevant image, and a Sound button 511 that is used to switch sound ES broadcasting and bilingual broadcasting. Moreover, the remote controllers 500A and 500B have a Superimposition button 512 that is used to validate or invalidate superimposition of characters or switch languages in which the characters are written, four Blue, Red, Green, and Yellow color buttons 520, and twelve A to L one-touch buttons 530 that are used to enter a pre-set service identifier (ID) so as to select a channel. In addition, the remote controller 500B designed for a television with a built-in BS tuner has a Volume button 540 that is used to adjust the volume of the television, a Sound Multiplex button 550 that is used to designate sound multiplex broadcasting, and a Silence button 551 that is used to silence the television with out press of the button. Moreover, the remote controller 500B has an Earth Wave button 560 and a BS button 570 which are used to switch a channel assigned to an earth wave and a channel assigned to a satellite broadcasting service.

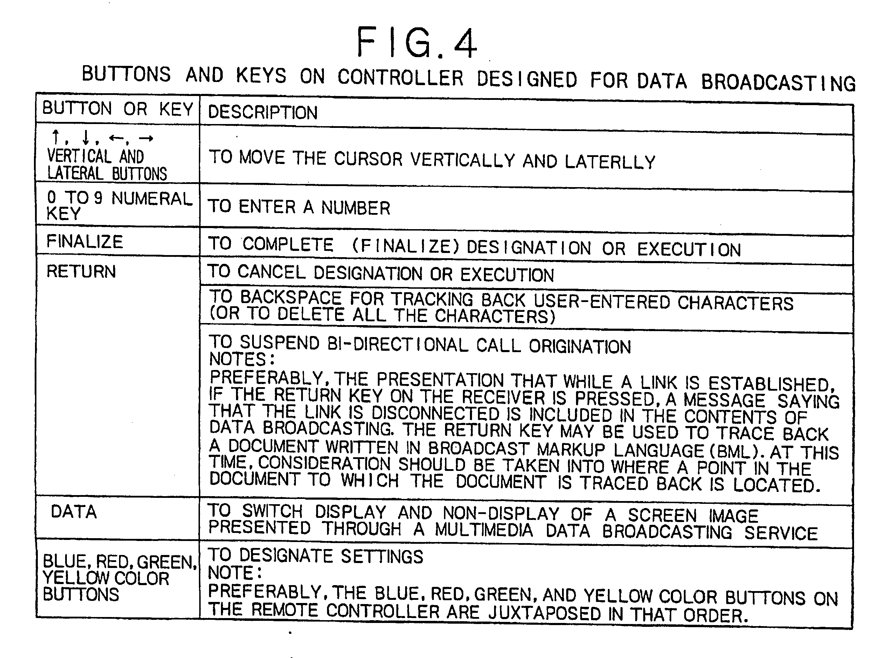

The remote controller 500A or 500B may be used to enjoy interactive broadcasting, that is, to select a product by utilizing a data broadcasting service or participate in a quiz show. In this case, as shown in Fig. 4, the arrow buttons (T, ↓, →, and ←) 505, 0 to 9 numeral keys (ten-key pad) 502, Finalize button 506, Return button 509, Data button 508, and four Blue, Red, Green, and Yellow color buttons 520 are used mainly. The arrow buttons 505 are used to vertically and laterally move the cursor that is displayed on the screen. The numeral keys 502 are used to enter a desired number. The Finalize button 506 is used to complete (finalize) designation or execution. The Return button 509 is used to cancel designation or execution, to backspace to trace back entered characters or delete all the entered characters, to suspend bi-directional call origination, or to return to the previous screen image (BML document). The Data button 508 is used to switch display and non-display of a screen image presented through a multimedia data broadcasting service. The four color buttons 520 are used to designate or execute any of operating codes assigned to the color buttons.

Herein, the feature of turning on the power supply of the receiver 220 is assigned to the Red, Blue, Green, and Yellow color buttons 520 (see Fig. 3) on the remote controller 500 (remote controller 500A or 500B). Users decide which of the color buttons 520 they will use. Consequently, when any of the users uses the remote controller 500 to turn on the power supply, the receiver 220 can identify the user. Incidentally, after the color button is used to turn on the power supply, features enabling designation or execution required during reception of a data broadcasting service or any other normal settings are assigned to the color buttons 520.

In the receiver 220, the use records associated with the four Red, Blue, Green, and Yellow color buttons on the remote controller 500 are set or stored. Moreover, the energizing feature may be assigned to the other operation buttons. For example, the Power button 501 and any of the one-touch buttons 530 may be pressed simultaneously, whereby the power supply may be turned on. Thus, a plurality of operation buttons may be used in combination in order to turn on the power supply. Furthermore, entry of a password or identification (ID) information may be requested for fear a user presses a color button other than the color button determined to be used exclusively by the user. Except when the power supply is turned on, the ordinary settings are assigned to the color buttons 520 (or other operation buttons). Therefore, in order to turn off the power supply of the receiver 220, all the users have to press the Power button 501.

The category of a broadcast program is used to investigate broadcast programs a user likes and dislikes. Taking for instance a BS digital broadcasting service stipulated in the ARIB standards, the category is described in a content descriptor included in an event information table (EIT). The event information table represents the arrangement of program information items, and is contained in a transport stream (TS) carried by a radio wave sent from a broadcasting station.

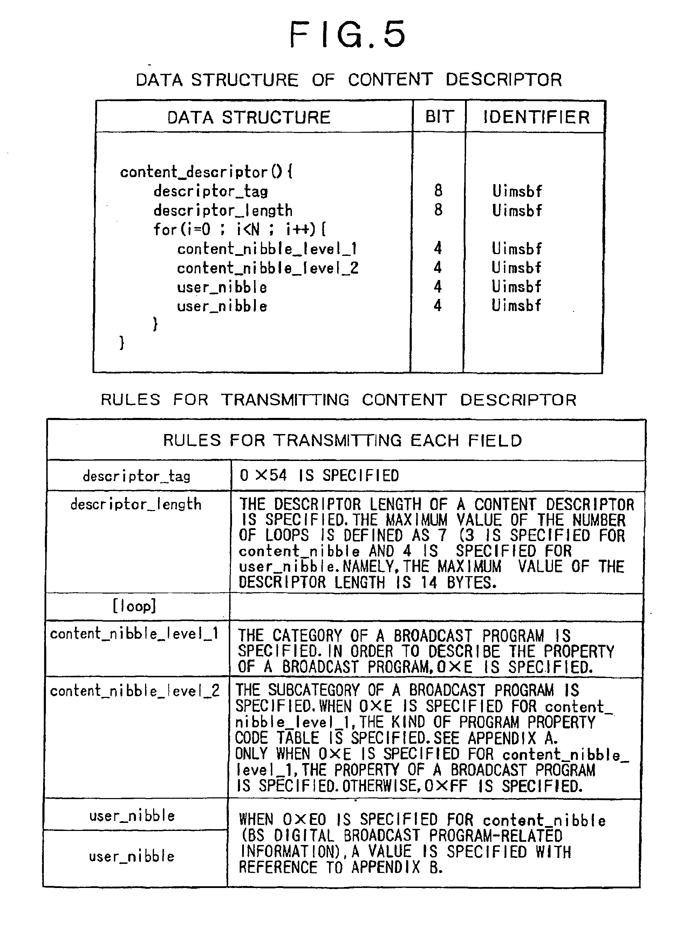

Fig. 5 shows the data structure of the content descriptor content_descriptor (). Namely, the content descriptor includes a descriptor tag descriptor_tag, a field specifying the descriptor length descriptor_length, a field content_nibble_level_1, a field content_nibble_level_2, and a field user_nibble. The fields content_nibble_level 1, content_nibble_level_2, and user_nibble are repeatedly described with a variable of i in a description of "for(i=0; i<N; I++" incremented by one within a range of i<N.

The descriptor tag descriptor_tag is a field of 8 bits long with which each descriptor is identified. In this example, 0×54 is specified. The descriptor length descriptor_length is a data field of 8 bits long specifying the byte length of data described immediately after the field. The maximum value of the number of loops is specified as 7 (3 is specified for content_nibble, and 4 is specified for user_nibble). Namely, the maximum value of the descriptor length is 14 bytes.

The field content_nibble_level_1 is 4 bits long and specifies the first-level category to which a program belongs (category of a program). In order to describe the property of a program, 0×E is specified. The field content_nibble_level_2 is 4 bits long and specifies the second-level category of a program (subcategory of a program). When 0×E is specified for content_nibble_level_1, a category code table (appendix A of clause TR-B15 in the ARIB standards) that lists kinds of program property code tables and that is supposed to be used at the start of broadcasting is referred to. The field user_nibble is 4 bits long and specified by a broadcasting entrepreneur. Only when 0×E is specified for content_nibble_level_1, the property of a program is described. In other cases, 0×FF is specified. When 0×E0 is specified for content_nibble (BS digital broadcast program-related information stipulated in the ARIB standards), a description concerning the coordination of broadcast programs, that is, which of broadcast programs should be canceled, extended, or suspended is made based on the program property code table that is supposed to be used at the start of broadcasting (appendix B of clause TR-B15 in the ARIB standards).

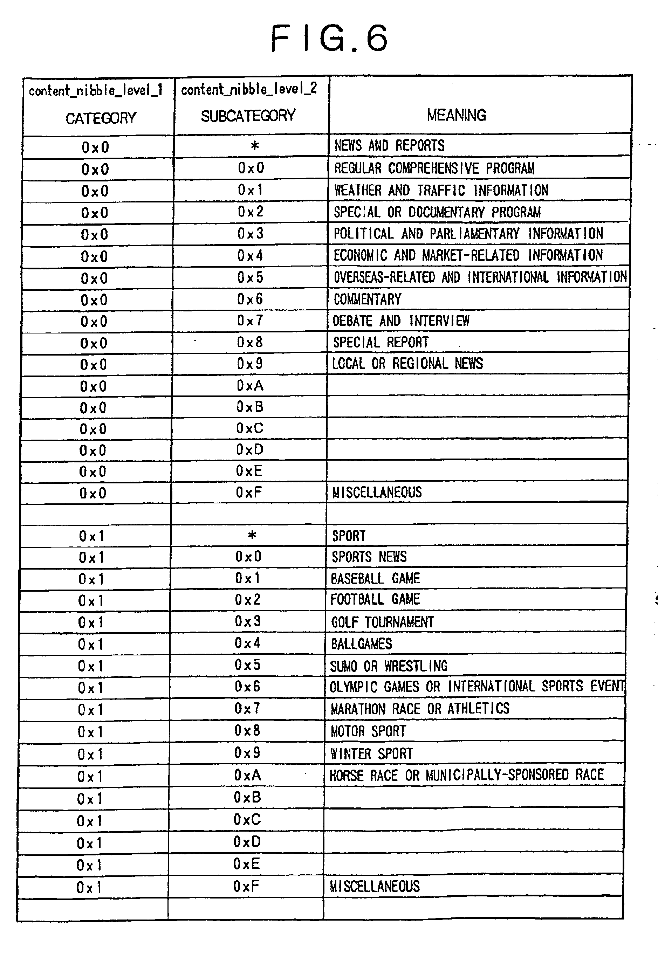

As for the categorization of a broadcast program, the category of a program is specified for content_nibble_level_1 and the subcategory thereof is specified for content_nibble_level_2. The description of the broadcast program is determined with the category and subcategory. For example, according to the ARIB standards listed in Fig. 6, when 0x0 is specified for content_nibble_level_1, the program presents news and reports. When 0x1 is specified therefor, the program presents a sport. The category is subdivided into the subcategory specified for content_nibble_level_2. When the category is news and reports (0x0 is specified for content_nibble_level_1), if 0x0 is specified for the subcategory content_nibble_level_2, the program is a regular program presenting comprehensive news and reports. If 0x1 is specified therefor, the program presents weather and traffic information. If 0x2 is specified therefor, the program is a special or documentary program. When the category is sports (0x1 is specified for content_nibble_level_1), if 0x0 is specified for the subcategory content_nibble_level_2, the program presents sports news. If 0x1 is specified therefor, the program presents a baseball game.

Next, the actions of the receiver (see Fig. 2) included in the receiving system will be described on the assumption that the broadcasting and receiving system shown in Fig. 1 is used to receive a digital broadcasting service.

A user presses the color button 520 (Red, Blue, Green, or Yellow button) on the remote controller 500 which is predetermined to be used exclusively by the user, and thus turns on the power supply of the receiver 220.

The receiver 220 identifies the user, who has turned on the power supply, according to the color of the pressed color button 520 on the remote controller 500, and acts according to the settings of the operation buttons on the remote controller 500 determined by the user. Otherwise, the receiver analyzes previous use records and offers an environment in which the user who has turned on the power supply enjoys operating the receiver.

For example, assume that the Red color button 520 on the remote controller 500 (see Fig. 3) is pressed in order to turn on the power supply of the receiver 220. In this case, the 1 numeral key 502 is set to channel A, the 2 numeral key 502 is set to channel B, the 3 numeral key 502 is set to channel C, etc., and the 0 numeral key 502 is set to channel G. When the Blue color button is used to turn on the power supply, the 1 numeral key is set to channel C, the 2 numeral key is set to channel E, the 3 numeral key is set to channel D, etc., and the 0 numeral key is set to channel B. When the Green color button is used to turn on the power supply, the 1 numeral key is set to channel E, the 2 numeral key is set to channel A, the 3 numeral key is set to channel B, etc., and the 0 numeral key is set to channel C. When the Yellow color button is used to turn on the power supply, the 1 numeral key is set to channel B, the 2 numeral key is set to channel F, the 3 numeral key is set to channel G, etc., and the 0 numeral key is set to channel D. Thus, the channels which are assigned to the broadcasting stations and to which the numeral keys 502 on the remote controller 500 are set are varied depending on which of the color buttons 520 is pressed in order to turn on the power supply of the receiver 220. The receiver 220 can be operated with the setting of the operation buttons determined in each user's easy-to-use manner. Incidentally, after any of the color buttons 520 is used to turn on the power supply (when the color buttons 520 need not be used to turn on the power supply), normal settings including a setting permitting designation or execution required during reception of a digital broadcasting service are allocated to the color buttons 520. Moreover, in order to turn off the power supply of the receiver 220, all the users have to press the Power button 501.

Next, a description will be made of a case where the receiver 220 is used to read electronic program information EPG.

When a user wants to view a broadcast program using the receiving system 200, the user presses any of the color buttons 520 on the remote controller 500 (see Fig. 3) so as to turn on the power supply of the receiver 220. The receiver 220 identifies the user according to which of the Red, Blue, Green, and Yellow color buttons 520 is pressed. The receiver 220 acts depending on the user. The user then views various broadcast programs. Consequently, data representing the categories of the broadcast programs and being separated by the multiplexer 222 included in the receiver 220 is transmitted to the information providing system 300 owned by an information provider over the network 400 such as telephone lines. In addition, viewing information concerning the viewed broadcast programs, which contains user information with which the user is identified, is transmitted to the information providing system 300. The information providing system 300 acquires and analyzes the viewer data concerning the user by checking the user information contained in the viewing information sent from the receiver 220. The information providing system 300 transmits broadcast program information and product information, which matches the user's likes and dislikes, to the receiver 220. Incidentally, the receiver 220 may have a feature that preserves (acquires) and analyzes viewing information concerning broadcast programs viewed by a user, picks up program information or product information, which matches the user's likes and dislikes, from electronic program information sent from the information providing system 300 or the like, and presents the picked up information.

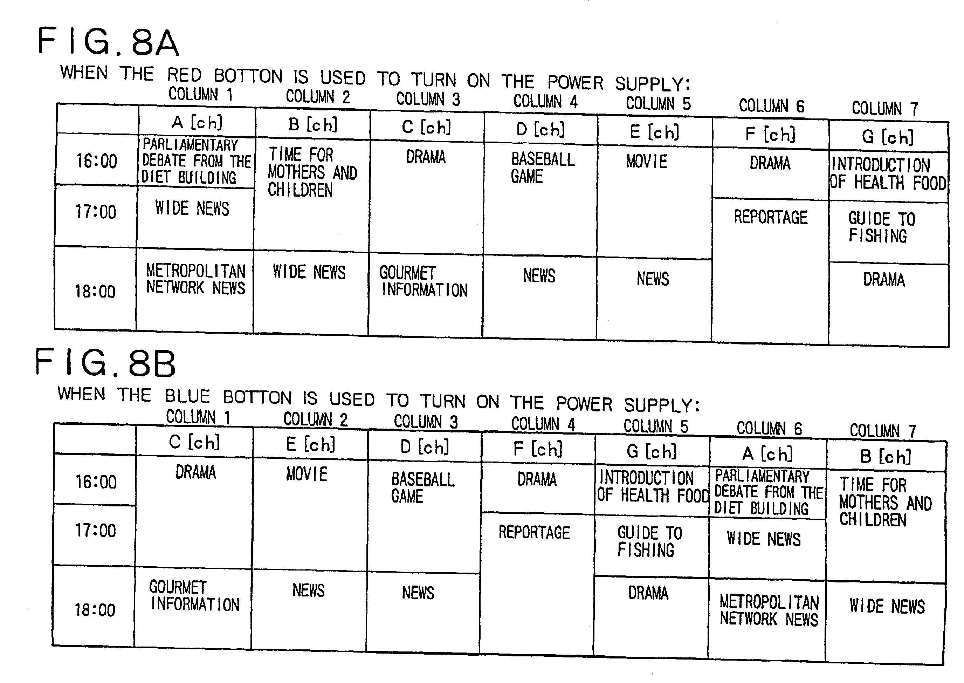

For example, assume that a user wants to read a program list that lists channel by channel the information items of programs to be presented from 16:00 to 18:00 and that is provided as electronic program information shown in Fig. 8. In this case, the information providing system 300 connected to the receiver 200 transmits broadcast program information (product information), which matches user's likes and dislikes, according to the broadcast programs viewed by the user so far. At this time, the information items of programs sent on channels which are displayed on the screen are arranged differently depending on which of the color buttons 520 is used to turn on the power supply of the receiver 200. Namely, if the Red color button 520 is used to turn on the power supply, the information items of programs sent on channel A are listed on column 1. The information items of programs sent on channel B are listed on column 2, those of programs sent on channel C are listed on column 3, those of programs sent on channel D are listed on column 4, those of programs sent on channel E are listed on column 5, those of programs sent on channel F are listed on column 6, and those of programs sent on channel G are listed on column 7 (see Fig. 8A). If the Blue color button is used to turn on the power supply, the information items of programs sent on channel C are listed on column 1. Moreover, the information items of programs sent on channel E are listed on column 2, those of programs sent on channel D are listed on column 3, those of programs sent on channel F are listed on column 4, those of programs sent on channel G are listed on column 5, those of programs sent on channel A are listed on column 5, and those of programs sent on channel 7 are listed on column 7 (see Fig. 8B). Thus, the information items of programs sent on channels are arranged in each user's easy-to-see manner (sequence).

The aforesaid electronic equipment is a receiver designed to receive a digital broadcasting service. The electronic equipment may be adapted to any equipment having a plurality of energizing means, for example, a set-top unit or a personal computer. In any case, when a user turns on the power supply of the electronic equipment, the electronic equipment identifies the user. Therefore, the electronic equipment can be operated based on predefined settings or settings dependent on the use records relevant to the user, or operated in an environment in which the user enjoys operating the equipment. Moreover, needless to say, the present invention is not limited to the electronic equipment.

### Industrial Applicability

As described so far, each person uses a different means (operation button) to turn on the power supply of electronic equipment. Therefore, when the power supply is turned on, a user can be identified. Consequently, the electronic equipment can be operated in an environment, in which each user enjoys operating the equipment, according to predefined settings or settings dependent on the use records relevant to each user. Moreover, the use records of the equipment or viewed broadcast programs can be acquired and analyzed for each user. Viewing information that used to be acquired equipment by equipment can now be acquired user by user. Broadcast program information or product information that matches more greatly each user's likes and dislikes can be provided, and an environment in which each user enjoys operating the equipment can be provided.

Various different aspects and features of the present invention are defined in the appended claims. Combinations of features from the dependent claims may be combined with features of the independent claims as appropriate and not merely as explicitly set out in the claims.

## Claims

1. An electronic equipment control method for electronic equipment (200) which is shared by a plurality of users, said electronic equipment having a plurality of power buttons (501, 520) that are used to turn on the power supply of the electronic equipment, wherein said power buttons are operation buttons on a remote controller (500) included in said electronic equipment, comprising:
storing a plurality of environment settings, each environment being set by a respective user of the electronic equipment and corresponding to a respective one of said plurality of power buttons on the remote controller;
when any of said power buttons is used to turn on the power supply, judging which of said power buttons is used to turn on the power supply and recognizing the environment setting corresponding to the power button used to turn on the power supply; and
operating said equipment according to the recognized environment setting;
wherein the users can decide which of the plurality of power buttons each user will use, thereby allowing the electronic equipment to identify the user of the electronic equipment according to the power button used to turn on the power supply;
and wherein said plurality of power buttons comprises colour buttons having respective colours, and after the power supply is turned on, ordinary settings are assigned to said colour buttons.

2. An electronic equipment control method according to Claim 1, wherein said equipment operates according to the use records thereof by the identified user.

3. An electronic equipment control method according to Claim 2, wherein the data of the use records of said equipment is preserved in said equipment.

4. An electronic equipment control method according to Claim 2, wherein the data of the use records of said equipment is data transmitted to another device or system and manipulated thereby.

5. An electronic equipment control method according to Claim 1, wherein said equipment operates according to the numbers of times by which electronic program information items are selected by the identified user.

6. An electronic equipment control method according to Claim 1, wherein if said equipment is a receiver (220) for receiving broadcast programs, said electronic equipment operates according to broadcast programs viewed by the identified user.

7. An electronic equipment control method according to Claim 6, wherein the viewing information concerning the viewed broadcast programs is preserved in said equipment.

8. An electronic equipment control method according to Claim 6, wherein the viewing information concerning the viewed broadcast programs is information transmitted to another device or system and manipulated thereby.

9. An electronic equipment control method according to Claim 1, wherein if said equipment is a receiver for receiving broadcast programs, said equipment operates according to at least one of an arrangement of electronic program information items, a presented recommendation, a maneuver performed on said equipment, and an automatically-recorded broadcast program.

10. An electronic equipment control method according to Claim 1, wherein said equipment requests entry of a password by the identified user when the power supply thereof is turned on.

11. An electronic equipment control method according to Claim 1, wherein said operation buttons are buttons that comply with the ARIB TR-B15 standard.

12. An electronic equipment control method according to Claim 1, wherein said operation buttons are any of color buttons, numeral buttons, and arrow buttons that comply with the ARIB TR-B15 standard, or a combination thereof.

13. An electronic equipment control method according to Claim 1, wherein said electronic equipment is any of a digital broadcasting receiver, a set-top unit, and a personal computer.

14. An electronic equipment control method according to Claim 1, wherein said electronic equipment has a sole button (501) that is used to turn off the power supply.

15. Electronic equipment which is shared by a plurality of users, said electronic equipment having a plurality of power buttons that are used to turn on the power supply of the electronic equipment, wherein said power buttons are operation buttons on a remote controller (500) included in said electronic equipment, wherein when any of said power buttons is used to turn on the power supply, said electronic equipment is configured to:
store a plurality of environment settings, each environment being set by a respective user of the electronic equipment and corresponding to a respective one of said plurality of power buttons on the remote controller;
judge which of said power buttons is used to turn on the power supply and recognize the environment setting corresponding to the power button used to turn on the power supply; and
operate according to the recognized environment setting;
wherein the users can decide which of the plurality of power buttons each user will use, thereby allowing the electronic equipment to identify the user of the electronic equipment according to the power button used to turn on the power supply;
and wherein said plurality of power buttons comprises colour buttons having respective colours, and after the power supply is turned on, ordinary settings are assigned to said colour buttons.

16. Electronic equipment according to Claim 15, wherein said equipment is configured to operate according to the use records thereof by the identified user.

17. Electronic equipment according to Claim 16, wherein the data of the use records of said equipment is preserved in said equipment.

18. Electronic equipment according to Claim 16, wherein the data of the use records of said equipment is data transmitted to another device or system and manipulated thereby.

19. Electronic equipment according to Claim 15, wherein said equipment is configured to operate according to the numbers of times by which electronic program information items are selected by the identified user.

20. Electronic equipment according to Claim 15, wherein if said equipment is a receiver for receiving broadcast programs, said electronic equipment is configured to operate according to broadcast programs viewed by the identified user.

21. Electronic equipment according to Claim 20, wherein the viewing information concerning the viewed broadcast programs is preserved in said equipment.

22. Electronic equipment according to Claim 20, wherein the viewing information concerning the viewed broadcast programs is information transmitted to another device or system and manipulated thereby.

23. An electronic equipment according to Claim 15, wherein if said equipment is a receiver for receiving broadcast programs, said equipment is configured to operate according to at least one of an arrangement of electronic program information items, a presented recommendation, a maneuver performed on said equipment, and an automatically-recorded broadcast program.

24. Electronic equipment according to Claim 15, wherein said equipment is configured to request entry of a password by the identified user when the power supply thereof is turned on.

25. Electronic equipment according to Claim 15, wherein said operation buttons are buttons that comply with the ARIB TR-B15 standard.

26. Electronic equipment according to Claim 15, wherein said operation buttons are any of color buttons, numeral buttons, and arrow buttons that comply with the ARIB TR-B15 standard, or a combination thereof.

27. Electronic equipment control method according to Claim 15, wherein said electronic equipment is any of a digital broadcasting receiver, a set-top unit, and a personal computer.

28. Electronic equipment according to Claim 15, wherein said electronic equipment has a sole button that is used to turn off the power supply.

## Patentansprüche

1. Elektronikgerät-Steuerungsverfahren für ein elektronisches Gerät (200), das von mehreren Benutzern gemeinsam benutzt wird, wobei das elektronische Gerät mehrere Einschaltknöpfe (501, 520) aufweist, die zum Einschalten der Energieversorgung des elektronischen Geräts benutzt werden, wobei die Einschaltknöpfe Bedienungsknöpfe an einer in dem elektronischen Gerät enthaltenen Fernbedienung (500) sind aufweisend:
Speichern mehrerer Umgebungseinstellungen, wobei jede Umgebung von einem jeweiligen Benutzer des elektronischen Geräts und entsprechend einem jeweiligen der mehreren Einschaltknöpfe auf der Fernbedienung eingestellt wird,
wenn irgendeiner der Einschaltknöpfe zum Einschalten der Energieversorgung benutzt wird, Entscheiden, welcher der Einschaltknöpfe zum Einschalten der Energieversorgung benutzt wird,
und Erkennen der Umgebungseinstellung entsprechend dem zum Einschalten der Energieversorgung benutzten Einschaltknopf, und
Betreiben des Geräts entsprechend der erkannten Umgebungseinstellung,
wobei die Benutzer bestimmen können, welchen der mehreren Einschaltknöpfe jeder Benutzer benutzen wird, wodurch es dem elektronischen Gerät ermöglicht wird, den Benutzer des elektronischen Geräts entsprechend dem zum Einschalten der Energieversorgung benutzten Einschaltknopf zu identifizieren;
und wobei die mehreren Einschaltknöpfe Farbknöpfe umfassen, die jeweilige Farben aufweisen, und nachdem die Energieversorgung eingeschaltet ist, den Farbknöpfen gewöhnliche Einstellungen zugewiesen warden.

2. Elektronikgerät-Steuerungsverfahren nach Anspruch 1, wobei das Gerät entsprechend seinen Benutzungsaufzeichnungen durch den identifizierten Benutzer arbeitet.

3. Elektronikgerät-Steuerungsverfahren nach Anspruch 2, wobei die Daten der Benutzungsaufzeichnungen des Geräts im Gerät aufbewahrt werden.

4. Elektronikgerät-Steuerungsverfahren nach Anspruch 2, wobei die Daten der Benutzungsaufzeichnungen des Geräts Daten sind, die zu einer anderen Einrichtung oder einem anderen System übertragen und durch dieses manipuliert werden.

5. Elektronikgerät-Steuerungsverfahren nach Anspruch 1, wobei das Gerät entsprechend den Anzahlen von Malen, bei denen elektronische Programminformationseinzelheiten durch den identifizierten Benutzer ausgewählt werden, arbeitet.

6. Elektronikgerät-Steuerungsverfahren nach Anspruch 1, wobei, wenn das Gerät ein Empfänger (220) zum Empfangen von Rundfunkprogrammen ist, das elektronische Gerät entsprechend Rundfunkprogrammen, die vom identifizierten Benutzer angeschaut werden, arbeitet.

7. Elektronikgerät-Steuerungsverfahren nach Anspruch 6, wobei die Anschauinformationen betreffend die angeschauten Rundfunkprogramme im Gerät aufbewahrt werden.

8. Elektronikgerät-Steuerungsverfahren nach Anspruch 6, wobei die Anschauinformationen betreffend die angeschauten Rundfunkprogramme Informationen sind, die zu einer anderen Einrichtung oder einem anderen System übertragen und durch dieses manipuliert werden.

9. Elektronikgerät-Steuerungsverfahren nach Anspruch 1, wobei, wenn das Gerät ein Empfänger zum Empfangen von Rundfunkprogrammen ist, das Gerät entsprechend wenigstens einem von einer Anordnung von Elektronikprogramm-Informationseinzelheiten, einer präsentierten Empfehlung, einem auf dem Gerät ausgeführten Manöver und einem automatisch aufgezeichneten Rundfunkprogramm arbeitet.

10. Elektronikgerät-Steuerungsverfahren nach Anspruch 1, wobei das Gerät Eingabe eines Passworts durch den identifizierten Benutzer anfordert, wenn seine Energieversorgung eingeschaltet wird.

11. Elektronikgerät-Steuerungsverfahren nach Anspruch 1, wobei die Bedienungsknöpfe Knöpfe sind, die mit dem ARIB TR-B15-Standard in Einklang stehen.

12. Elektronikgerät-Steuerungsverfahren nach Anspruch 1, wobei die Bedienungsknöpfe irgendwelche von Farbknöpfen, Nummernknöpfen und Pfeilknöpfen sind, die mit dem ARIB TR-B15-Standard in Einklang stehen, oder eine Kombination daraus sind.

13. Elektronikgerät-Steuerungsverfahren nach Anspruch 1, wobei das elektronische Gerät irgendeines von einem digitalen Rundfunkempfänger, einer Set-Top-Einheit und einem Personalcomputer ist.

14. Elektronikgerät-Steuerungsverfahren nach Anspruch 1, wobei das elektronische Gerät einen einzigen Knopf (501) aufweist, der zum Ausschalten der Energieversorgung benutzt wird.

15. Elektronisches Gerät, das von mehreren Benutzern gemeinsam benutzt wird, wobei das elektronische Gerät mehrere Einschaltknöpfe aufweist, die zum Einschalten der Energieversorgung des elektronischen Geräts benutzt werden, wobei die Einschaltknöpfe Bedienungsknöpfe auf einer Fernbedienung (500) sind, die im elektronischen Gerät enthalten ist, wobei, wenn irgendeiner der Einschaltknöpfe zum Einschalten der Energieversorgung benutzt wird, das elektronische Gerät konfiguriert ist zum:
Speichern mehrerer Umgebungseinstellungen, wobei jede Umgebung von einem jeweiligen Benutzer des elektronischen Geräts und entsprechend einem jeweiligen der mehreren Einschaltknöpfe eingestellt wird,
Entscheiden, welcher der Einschaltknöpfe zum Einschalten der Energieversorgung benutzt wird, und Erkennen der Umgebungseinstellung entsprechend dem zum Einschalten der Energieversorgung benutzten Einschaltknopf, und
Arbeiten entsprechend der erkannten Umgebungseinstellung,
wobei die Benutzer bestimmen können, welchen der mehreren Einschaltknöpfe jeder Benutzer benutzen wird, wodurch es dem elektronischen Gerät ermöglicht wird, den Benutzer des elektronischen Geräts entsprechend dem zum Einschalten der Energieversorgung benutzten Einschaltknopf zu identifizieren;
und wobei die mehreren Einschaltknöpfe Farbknöpfe umfassen, die jeweilige Farben aufweisen, und nachdem die Energieversorgung eingeschaltet ist, den Farbknöpfen gewöhnliche Einstellungen zugewiesen warden.

16. Elektronisches Gerät nach Anspruch 15, wobei das Gerät konfiguriert ist zum Arbeiten entsprechend seinen Benutzungsaufzeichnungen durch den identifizierten Benutzer.

17. Elektronisches Gerät nach Anspruch 16, wobei die Daten der Benutzungsaufzeichnungen des Geräts im Gerät aufbewahrt werden.

18. Elektronisches Gerät nach Anspruch 16, wobei die Daten der Benutzungsaufzeichnungen des Geräts Daten sind, die zu einer anderen Einrichtung oder zu einem anderen System übertragen und durch dieses manipuliert werden.

19. Elektronisches Gerät nach Anspruch 15, wobei das Gerät konfiguriert ist zum Arbeiten entsprechend den Anzahlen von Malen, bei denen elektronische Programminformationseinzelheiten vom identifizierten Benutzer ausgewählt werden.

20. Elektronisches Gerät nach Anspruch 15, wobei, wenn das Gerät ein Empfänger zum Empfangen von Rundfunkprogrammen ist, das elektronische Gerät konfiguriert ist zum Arbeiten entsprechend Rundfunkprogrammen, die vom identifizierten Benutzer angeschaut werden.

21. Elektronisches Gerät nach Anspruch 20, wobei die Anschauinformationen betreffend die angeschauten Rundfunkprogramme im Gerät aufbewahrt werden.

22. Elektronisches Gerät nach Anspruch 20, wobei die Anschauinformationen betreffend die angeschauten Rundfunkprogramme Informationen sind, die zu einer anderen Einrichtung oder einem anderen System übertragen und durch dieses manipuliert werden.

23. Elektronisches Gerät nach Anspruch 15, wobei, wenn das Gerät ein Empfänger zum Empfangen von Rundfunkprogrammen ist, das Gerät konfiguriert ist zum Arbeiten entsprechend wenigstens einem von einer Anordnung von elektronischen Programminformationseinzelheiten, einer präsentierten Empfehlung, einem auf dem Gerät ausgeführten Manöver und einem automatisch aufgezeichneten Rundfunkprogramm.

24. Elektronisches Gerät nach Anspruch 15, wobei das Gerät konfiguriert ist zum Anfordern von Eingabe eines Passworts durch den identifizierten Benutzer, wenn seine Energieversorgung eingeschaltet wird.

25. Elektronisches Gerät nach Anspruch 25, wobei die Bedienungsknöpfe Knöpfe sind, die mit dem ARIB TR-B15-Standard in Einklang stehen.

26. Elektronisches Gerät nach Anspruch 15, wobei die Bedienungsknöpfe irgendwelche von Farbknöpfen, Nummernknöpfen und Pfeilknöpfen, die mit dem ARIB TR-B15-Standard in Einklang stehen, oder eine Kombination daraus sind.

27. Elektronikgerät-Steuerungsverfahren nach Anspruch 15, wobei das elektronische Gerät irgendeines von einem Digitalrundfunkempfänger, einer Set-Top-Einheit und einem Personalcomputer ist.

28. Elektronisches Gerät nach Anspruch 15, wobei das elektronische Gerät einen einzigen Knopf aufweist, der zum Ausschalten der Energieversorgung benutzt wird.

## Revendications

1. Procédé de contrôle d'un équipement électronique pour un équipement électronique (200) qui est partagé par une pluralité d'utilisateurs, ledit équipement électronique possédant une pluralité de touches d'alimentation (501, 520) qui sont utilisées pour brancher l'alimentation de l'équipement électronique, lesdites touches d'alimentation étant des touches de fonctionnement sur une télécommande (500) comprise dans ledit équipement électronique, comportant :
la mémorisation d'une pluralité de configurations d'environnement, chaque environnement étant configuré par un utilisateur respectif de l'équipement électronique et correspondant à une touche d'alimentation respective de ladite pluralité de touches d'alimentation sur la télécommande;
lorsque l'une quelconque desdites touches d'alimentation est utilisée pour brancher l'alimentation, l'estimation pour savoir laquelle desdites touches d'alimentation est utilisée pour brancher l'alimentation et la reconnaissance de la configuration d'environnement correspondant à la touche d'alimentation utilisée pour brancher l'alimentation ; et
le fonctionnement dudit équipement conformément à la configuration d'environnement reconnue;
dans lequel les utilisateurs peuvent décider laquelle de la pluralité des touches d'alimentation sera utilisée par chaque utilisateur, permettant ainsi à l'équipement électronique d'identifier l'utilisateur de l'équipement électronique conformément à la touche d'alimentation utilisée pour brancher l'alimentation;
et dans lequel ladite pluralité de touches d'alimentation comprend des touches de couleur ayant des couleurs respectives, et une fois que l'alimentation est branchée, des configurations ordinaires sont attribuées auxdites touches de couleur.

2. Procédé de contrôle d'un équipement électronique selon la revendication 1, dans lequel ledit équipement fonctionne selon ses enregistrements d'utilisation par l'utilisateur identifié.

3. Procédé de contrôle de l'équipement électronique selon la revendication 2, dans lequel les données des enregistrements d'utilisation dudit équipement sont conservées dans ledit équipement.

4. Procédé de contrôle d'un équipement électronique selon la revendication 2, dans lequel les données des enregistrements d'utilisation dudit équipement sont des données transmises à un autre dispositif ou système et manipulées par celui-ci.

5. Procédé de contrôle d'un équipement électronique selon la revendication 1, dans lequel ledit équipement fonctionne conformément au nombre de fois que les informations de programme électronique sont sélectionnées par l'utilisateur identifié.

6. Procédé de contrôle d'un équipement électronique selon la revendication 1, dans lequel, si ledit équipement est un récepteur (220) pour recevoir des programmes de diffusion, ledit équipement électronique fonctionne conformément aux programmes de diffusion visualisés par l'utilisateur identifié.

7. Procédé de contrôle d'un équipement électronique selon la revendication 6, dans lequel l'information de visualisation concernant les programmes de diffusion visualisés est conservée dans ledit équipement.

8. Procédé de contrôle d'un équipement électronique selon la revendication 6, dans lequel l'information de visualisation concernant les programmes de diffusion visualisés est une information transmise à un autre dispositif ou système et manipulée par celui-ci.

9. Procédé de contrôle d'un équipement électronique selon la revendication 1, dans lequel si ledit équipement est un récepteur pour recevoir des programmes de diffusion, ledit équipement fonctionne selon au moins l'un d'un agencement d'informations de programme électronique, d'une recommandation présentée, d'une manoeuvre effectuée sur ledit équipement, et d'un programme de diffusion enregistré automatiquement.

10. Procédé de contrôle d'un équipement électronique selon la revendication 1, dans lequel ledit équipement demande l'entrée d'un mot de passe par l'utilisateur identifié lorsque son alimentation est branchée.

11. Procédé de contrôle d'un équipement électronique selon la revendication 1, dans lequel lesdites touches de fonctionnement sont des touches qui correspondent au standard ARIB TR-B15.

12. Procédé de contrôle d'un équipement électronique selon la revendication 1, dans lequel lesdites touches de fonctionnement sont l'une quelconque de touches de couleur, de touches numériques, et de touches fléchées qui correspondent au standard ARIB TR-B15, ou une combinaison de celles-ci.

13. Procédé de contrôle d'un équipement électronique selon la revendication 1, dans lequel ledit équipement électronique est l'un quelconque d'un récepteur de diffusion numérique, d'une unité de décodage, et d'un ordinateur personnel.

14. Procédé de contrôle d'un équipement électronique selon la revendication 1, dans lequel ledit équipement électronique possède une unique touche (501) qui est utilisée pour couper l'alimentation.

15. Équipement électronique qui est partagé par une pluralité d'utilisateurs, ledit équipement électronique possédant une pluralité de touches d'alimentation qui sont utilisées pour brancher l'alimentation de l'équipement électronique, lesdites touches d'alimentation étant des touches de fonctionnement sur une télécommande (500) comprise dans ledit équipement électronique,
ledit équipement électronique, lorsque l'une quelconque desdites touches d'alimentation est utilisée pour brancher l'alimentation, étant configuré pour :
mémoriser une pluralité de configurations d'environnement, chaque environnement étant configuré par un utilisateur respectif de l'équipement électronique et correspondant à une touche d'alimentation respective de ladite pluralité de touches d'alimentation sur la télécommande;
estimer laquelle desdites touches d'alimentation est utilisée pour brancher l'alimentation et reconnaître la configuration d'environnement correspondant à la touche d'alimentation utilisée pour brancher l'alimentation ; et
fonctionner conformément à la configuration d'environnement reconnue ;
dans lequel les utilisateurs peuvent décider laquelle de la pluralité de touches d'alimentation sera utilisée par chaque utilisateur, permettant ainsi à l'équipement électronique d'identifier l'utilisateur de l'équipement électronique conformément à la touche d'alimentation utilisée pour brancher l'alimentation;
et dans lequel ladite pluralité de touches d'alimentation comprend des touches de couleur ayant des couleurs respectives, et une fois que l'alimentation est branchée, des configurations ordinaires sont attribuées auxdites touches de couleur.

16. Équipement électronique selon la revendication 15, dans lequel ledit équipement est configuré pour fonctionner selon ses enregistrements d'utilisation par l'utilisateur identifié.

17. Équipement électronique selon la revendication 16, dans lequel les données des enregistrements d'utilisation dudit équipement sont conservées dans ledit équipement.

18. Équipement électronique selon la revendication 16, dans lequel les données des enregistrements d'utilisation dudit équipement sont des données transmises à un autre dispositif ou système et manipulées par celui-ci.

19. Équipement électronique selon la revendication 15, dans lequel ledit équipement est configuré pour fonctionner conformément aux nombres de fois que les informations de programme électronique sont sélectionnées par l'utilisateur identifié.

20. Équipement électronique selon la revendication 15, dans lequel, si ledit équipement est un récepteur pour recevoir des programmes de diffusion, ledit équipement électronique est configuré pour fonctionner conformément aux programmes de diffusion visualisés par l'utilisateur identifié.

21. Équipement électronique selon la revendication 20, dans lequel l'information de visualisation concernant les programmes de diffusion visualisés est conservée dans ledit équipement.

22. Équipement électronique selon la revendication 20, dans lequel l'information de visualisation concernant les programmes de diffusion visualisés est une information transmise à un autre dispositif ou système et manipulée par celui-ci.

23. Équipement électronique selon la revendication 15, dans lequel, si ledit équipement est un récepteur pour recevoir des programmes de diffusion, ledit équipement est configuré pour fonctionner selon au moins l'un d'un agencement d'informations de programme électronique, d'une recommandation présentée, d'une manoeuvre effectuée sur ledit équipement, et d'un programme de diffusion enregistré automatiquement.

24. Équipement électronique selon la revendication 15, dans lequel ledit équipement est configuré pour demander l'entrée d'un mot de passe par l'utilisateur identifié lorsque son alimentation est branchée.

25. Équipement électronique selon la revendication 15, dans lequel lesdites touches de fonctionnement sont des touches qui correspondent au standard ARIB TR-B15.

26. Équipement électronique selon la revendication 15, dans lequel lesdites touches de fonctionnement sont l'une quelconque de touches de couleur, de touches numériques, et de touches fléchées qui correspondent au standard ARIB TR-B15, ou une combinaison de celles-ci.

27. Procédé de contrôle d'un équipement électronique selon la revendication 15, dans lequel ledit équipement électronique est l'un quelconque d'un récepteur de diffusion numérique, d'une unité de décodage, et d'un ordinateur personnel.

28. Équipement électronique selon la revendication 15, dans lequel ledit équipement électronique possède une unique touche qui est utilisée pour couper l'alimentation.
